(19) Europäisches Patentamt
European Patent Office
Office européen des brevets

(11) Veröffentlichungsnummer: **0 083 299**
**B2**

(12) **NEUE EUROPÄISCHE PATENTSCHRIFT**

(45) Veröffentlichungstag der neuen Patentschrift: **13.06.90**

(51) Int. Cl.[5]: **D 06 P 3/06,** C 09 B 1/34, D 06 P 1/00, C 09 B 67/22

(21) Anmeldenummer: **82810052.9**

(22) Anmeldetag: **05.02.82**

(54) **Verfahren zum Trichromie-Färben oder -Bedrucken.**

(30) Priorität: **29.12.81 CH 8344/81**

(43) Veröffentlichungstag der Anmeldung: **06.07.83 Patentblatt 83/27**

(45) Bekanntmachung des Hinweises auf die Patenterteilung: **28.05.86 Patenblatt 86/22**

(45) Bekanntmachung des Hinweises auf die Entscheidung über den Einspruch: **13.06.90 Patentblatt 90/24**

(84) Benannte Vertragsstaaten: **AT BE CH DE FR GB IT LI NL**

(56) Entgegenhaltungen:
**EP-A-0 030 919**
**EP-A-0 042 357**
**EP-A-0 083 300**
**CH-B- 543 634**
**DE-A-2 130 698**
**DE-A-2 623 178**
**DE-B-2 710 152**

**Musterkarte "Nylosan/Lanasyn", Farbstofe und Chemikalien für Färbungen auf Polyamidfasern, SANDOZ, 1525/77.**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG**
**Klybeckstrasse 141**
**CH-4002 Basel (CH)**

(72) Erfinder: **Raisin, Helmut**
**Im Baumgarten 9**
**CH-4125 Riehen (CH)**
Erfinder: **Mäusezahl, Dieter, Dr.**
**Langgartenstrasse 19**
**CH-4105 Biel-Benken (CH)**
Erfinder: **Schaetzer, Harry**
**Waldmattstrasse 39**
**D-7867 Wehr 2 (DE)**

(56) References cited:
**Textilveredlung 12/(1975, Band 10) Rückdeckel.**
**Textilpraxis International 1976 (Seiten 895-898).**

**CIBA-GEIGY Musterkarte PA-3028 vom 31.03.1975 "TECTILON/CIBACET/TERASIL-Färben, Teinture, Dyeing - Teppichstück, Tapis en Pièce, Carpet piece", Seite 5.**

**Chemiefasern/Textilindustrie, September 1980, Seite 746.**

**BAYER Farben-Revue 21 (1972), Seiten 32-48.**

**Grundlagen der Textilveredlung, M. Peter, 1985, Seite 35.**

**EP 0 083 299 B2**

Courier Press, Leamington Spa, England.

**Beschreibung**

Die der vorliegenden Erfindung zugrundeliegende Aufgabe war es, ein Verfahren zum Färben oder Bedrucken von natürlichen und synthetischen Polyamidmaterialien mit zur Kombination nach dem Trichromie-Prinzip geeigneten Farbstoffen zu finden. Die in dem Verfahren zu verwendenden Farbstoffe sollenn einen gleichmässigen Farbaufbau bei gleichzeitiger Nuancenkonstanz in verschiedenen Konzentrationen und eine gute Kombinierbarkeit zeigen.

Es wurde nun gefunden, dass das unten beschriebene Verfahren den genannten Anforderungen genügt.

Gegenstand der vorliegenden Erfindung ist somit ein Verfahren zum Trichromie-Färben oder -Bedrucken von natürlichen und synthetischen Polyamidmaterialien mit Farbstoffmischungen, welches dadurch gekennzeichnet ist, dass maneinen Farbstoff der Formel

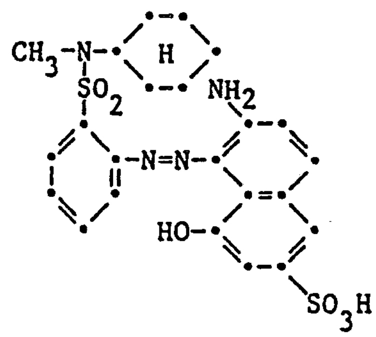

(1)

zusammen mit mindestens einem Farbstoff der Formel

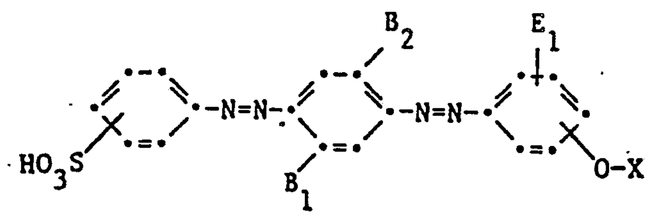

(2),

worin $B_1$, $B_2$ und $E_1$ Wasserstoff, $C_{1-4}$-Alkyl oder $C_{1-4}$-Alkoxy und X geradkettig oder verzweigtes $C_{1-4}$-Alkyl oder geradkettig oder verzweigtes $C_{2-4}$-Hydroxyalkyl bedeuten, und einem Farbstoff der Formel

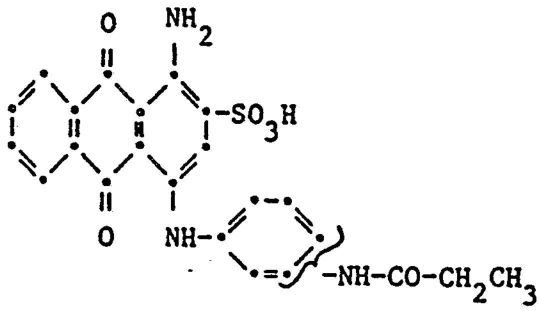

(6),

oder einer Mischung der Farbstoffe der Formeln

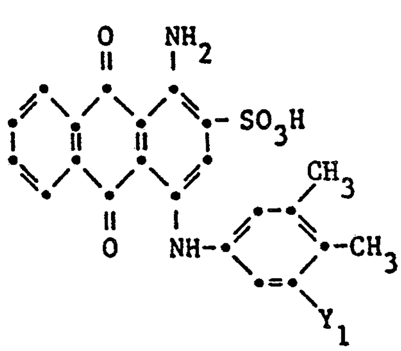

(4)

und

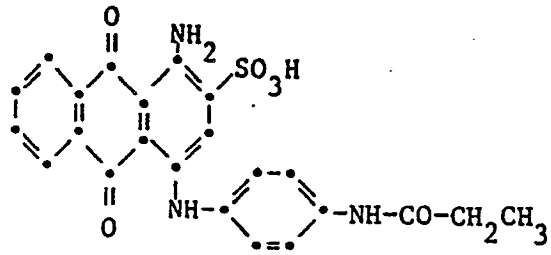

(10)

worin in Formel (4) $Y_1$ $C_{2-4}$-Hydroxyalkylsulphamoyl bedeutet, oder einem Farbstoff der Formel

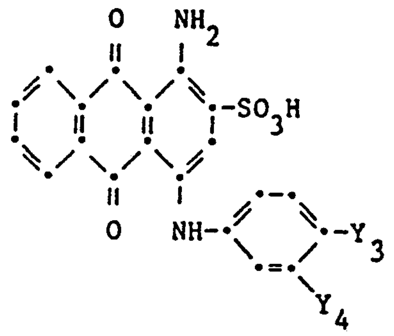

(7),

worin $Y_3$ Wasserstoff und $Y_4$ Acetylamino bedeuten, oder worin $Y_3$ Methyl und $Y_4$ $C_{2-4}$-Hydroxyalkylsulphamoyl bedeuten, verwendet.

Unter Trichromie ist die additive Farbmischung passend gewählter gelb- bzw. orange-, rot- und blaufärbender Farbstoffe zu verstehen, mit denen jede gewünschte Nuance des sichtbaren Farbspektrums durch geeignete Wahl der Mengenverhältnisse der Farbstoffe eingestellt werden kann.

Als Alkylreste kommen für $B_1$, $B_2$, $E_1$ und X in Formel (2) unabhängig voneinander geradkettig oder verzweigte Alkylreste in Betracht. Als Beispiele für $B_1$, $B_2$, $E_1$ und X seien genannt: Methyl, Aethyl, Propyl, Isopropyl, Butyl, sek.-Butyl, Isobutyl und tert.-Butyl.

Als Alkoxyreste kommen für $B_1$, $B_2$ und $E_1$ in Formel (2) beispielsweise der Methoxy-, Aethoxy-, Propoxy-, Isopropoxy-, Butoxy-, sek.-Butoxy-, Isobutoxy- oder tert.-Butoxyrest in Betracht.

Als Hydroxyalkylrest kommt für X in Formel (2) ein geradkettig oder verzweigter Hydroxyalkylrest in Betracht, wie beispielsweise der β-Hydroxyäthyl-, β-Hydroxypropyl-, β-Hydroxybutyl- oder der α-Aethyl- β-hydroxyäthylrest.

Als $C_{2-4}$-Hydroxyalkylsulphamoylrest kommt für $Y_1$ in Formel (4) beispielsweise der β-Hydroxyäthylsulphamoyl-, β-Hydroxypropylsulfphamoyl-, γ-Hydroxypropylsulphamoyl- oder der β-Hydroxybutyulsulphamoylrest in Betracht.

Die bevorzugten Verfahrensvarianten sind dadurch gekennzeichnet, dass man einen Farbstoff der Formel (1) zusammen mit mindestens einem Farbstoff der Formel (2) und

a) einer Farbstoffmischung, die den Farbstoff der Formel

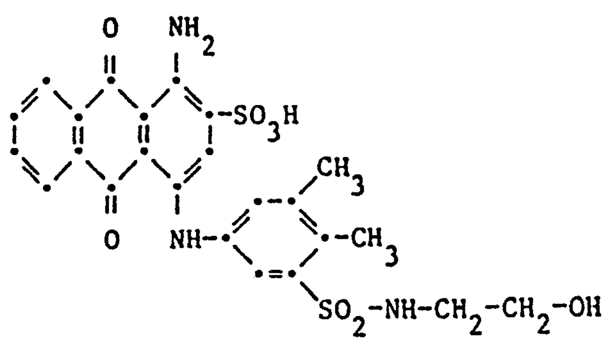

(11)

und den Farbstoff der Formel

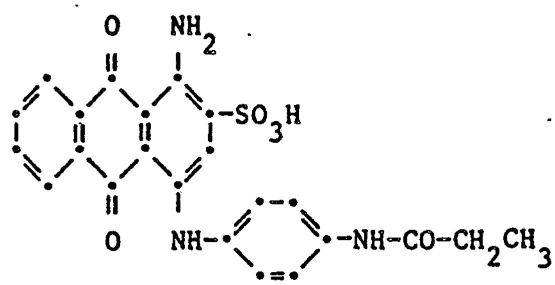

(10)

enthält, oder

b) dem Farbstoff der Formel

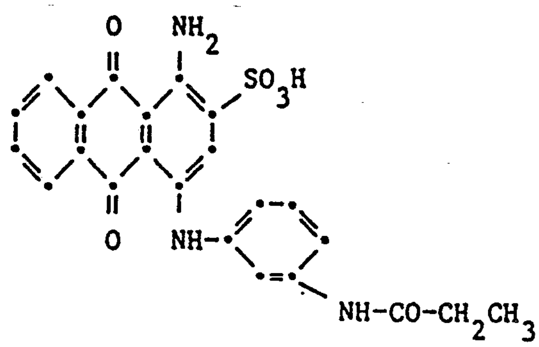

(12) oder

c) dem Farbstoff der Formel (10), oder

d) dem Farbstoff der Formel

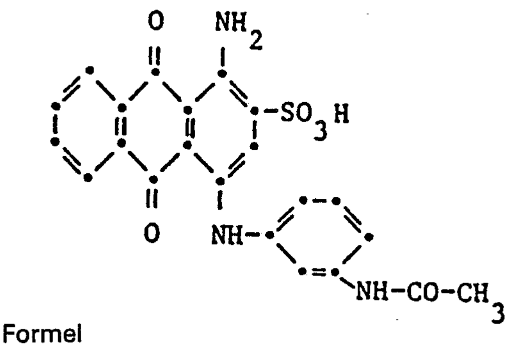

(13) oder

e) dem Farbstoff der Formel

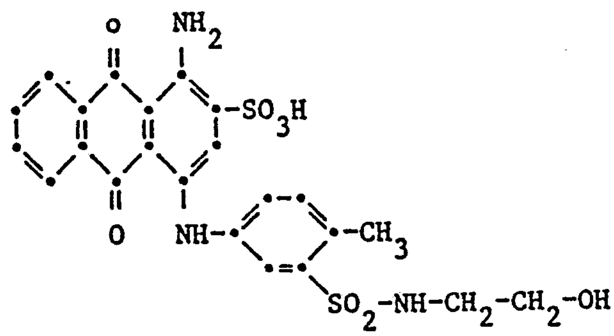

(14),

verwendet.

In den Verfahrensvarianten, worin eine Farbstoffmischung, der Farbsoffe der Formeln (11) und (10) verwendet wird, ist das Verhältnis der Farbstoffe der Formeln (11) und (10) vorzugsweise 60:40 bis 40:60.

Als Farbstoffe der Formel (2) sind die Farbstoffe der Formel

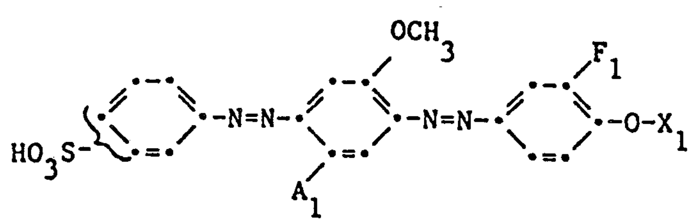

(17)

worin $A_1$ Wasserstoff oder Methyl, $F_1$ Wasserstoff oder Methyl und $X_1$ Methyl, Aethyl, β-Hydroxyäthyl, β-Hydroxypropyl, β-Hydroxybutyl oder α-Aethyl-β-hydroxyäthyl ist, in den oben beschriebenen Verfahrensvarianten bevorzugt.

Als Farbstoffe der Formel (2) sind insbesondere die Farbstoffe der Formeln

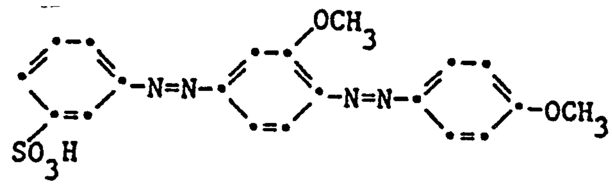

(18)

und

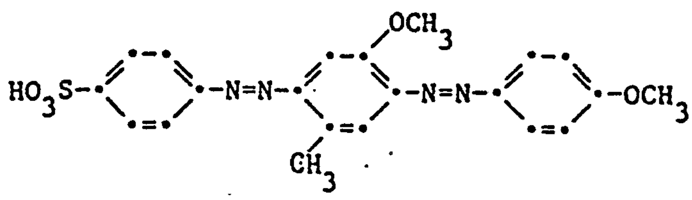

(19)

bevorzugt.

Die besonders bevorzugten Verfahrensvarianten sind dadurch gekennzeichnet, dass man den Farbstoff der Formel (1) zusammen mit dem Farbstoff der Formel

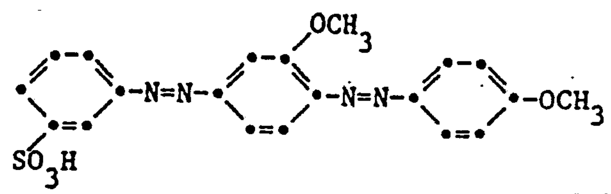

(18),

und mit einem der Farbstoffe der Formeln (13) oder (14), oder mit einer Farbstoffmischung der Farbstoffe der Formeln (11) und (10) im Verhältnis 60:40 bis 40:60 verwendet.

Eine ebenfalls besonders bevorzugte Verfahrensvariante ist dadurch gekennzeichnet, dass man den Farbstoff der Formel (1) zusammen mit dem Farbstoff der Formel

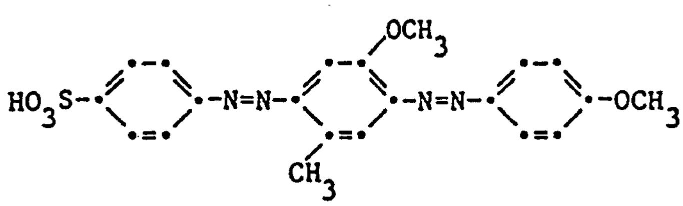

(19)

und einer Farbstoffmischung der Farbstoff der Formeln (11) und (10) im Verhältnis 60:40 bis 40:60 verwendet.

Die in dem erfindungsgemässen Verfahren zum Trichromie-Färben oder -Bedrucken verwendeten Farbstoffe sind bekannt oder können in Analogie zu bekannten Verfahren hergestellt werden. So kann beispielsweise der Farbstoff der Formel (1) gemäss den Angaben aus der deutschen Patentschrift 20 63 907, die Farbstoffe der Formel (2) gemäss den Angaben aus der deutschen Offenlegungsschrift 21 42 412 und die Farbstoffe der Formeln (4), (6) und (7) gemäss den Angaben aus der US—Patentschrift 3 778 453 bzw. in Analogie dazu, der deutschen Patentschrift 945,643 oder analog der deutschen Patentschrift 538 310 hergestellt werden.

Werden in dem erfindungsgemässen Verfahren Farbstoffmischung der Farbstoffe der Formel (2) oder der Formeln (4) und (10) verwendet, so kann diese durch Mischung der Einzelfarbstoffe hergestellt werden. Dieser Mischprozess erfolgt beispielsweise in geeigneten Mühlen, z.B. Kugel- und Stiftmühlen, sowie in Knetern oder Mixern.

Ferner können die Farbstoffmischungen der Farbstoffe der Formel (2) oder der Formeln (4) und (10) durch Zerstäubungstrocknen der wässrigen Farbstoffmischungen hergestellt werden.

Die in dem erfindungsgemässen Verfahren verwendeten Farbstoffe liegen entweder in der Form ihrer freien Sulfonsäure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammonium- salze oder das Salz des Triäthanolamins genannt.

Die in dem erfindungsgemässen Verfahren verwendeten Farbstoffmischungen enthalten in der Regel weitere Zusätze wie z.B. Kochsalz oder Dextrin.

Das erfindungsgemässe Verfahren zum Trichromie-Färben oder -Bedrucken kann auf die üblichen Färbe- bzw. Druckverfahren angewendet werden. Die Färbeflotten oder Druckpasten können ausser Wasser und den Farbstoffen weitere Zusätze, beispielsweise Netzmittel, Antischaummittel, Egalisiermittel oder die Eigenschaft des Textilmaterials beenflussende Mittel wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Das erfindungsgemässe Verfahren ist besonders zum Färben aus Kurzflotten, wie z.B. bei Kontinuefärbeverfahren oder diskontinuierlichen und kontinuierlichen Schaumfärbeverfahren, geeignet.

Die in dem erfindungsgemässen Verfahren verwendeten Farbstoffe zeichnen sich beim Trichromie-Färben oder -Bedrucken durch gleichmässigen Farbaufbau, gutes Aufziehverhalten, gute Nuancenkonstanz auch in verschiedenen Konzentrationen, gute Echtheiten sowie insbesondere durch sehr gute Kombinierkeit aus.

Das erfindungsgemässe Verfahren eignet sich zum Färben oder Bedrucken sowohl von natürlichen Polyamidmaterialien wie z.B. Wolle wie insbesondere von synthetischen Polyamidmaterialien wie z.B. Perlon oder Nylon und es ist geeignet zum Färben oder Bedrucken von Woll- und synthetischen Polyamid-Mischgeweben oder -Garnen.

Das genannte Textilmaterial kann dabei in den verschiedensten Verarbeitungsformen vorliegen, wie z.B. als Faser, Garn, Gewebe oder Gewirke und insbesondere in Form von Teppichen.

In der EP—A—00 30 919 und in der DE—A—26 23 178 werden Trichromieverfahren beschrieben, welche jedoch nicht gleich gute Resultate wie das erfindungsgemässe Verfahren aufweisen. Aus der EP—A—00 42 357 und der CH—A—543 634 sind weitere Trichromieverfahren mit strukturell verschiedenen Gelbkomponenten bekannt.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1

Zur Herstellung der Farbstoffmischung, die einen Farbstoff der Formel

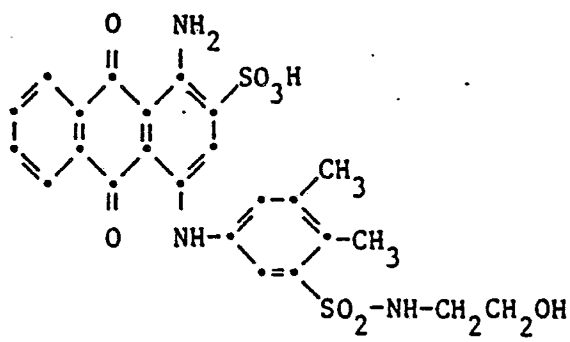

(11)

und einen Farbstoff der Formel

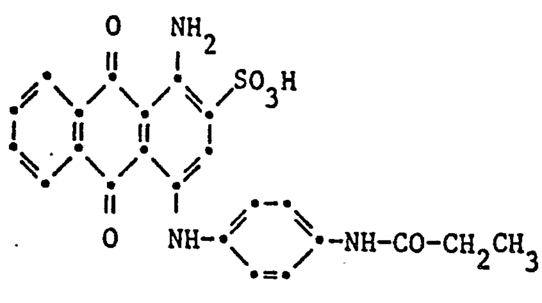

(10)

enthält, werden in einem Mixer

a) 30,2 Teile des Farbstoffs der Formel (11) und 69,8 Teile des Farbstoffs der Formel (10) homogen gemischt und ergeben 100 Teile der Mischung, die im folgenden als Farbstoffmischung A bezeichnet wird;

b) 56,6 Teile des Farbstoffs der Formel (11) und 43,4 Teile des Farbstoffs der Formel (10) homogen gemischt und ergeben 100 Teile der Mischung, die im folgenden als Farbstoffmischung B bezeichnet wird;

c) 79,6 Teile des Farbstoffs der Formel (11) und 20,4 Teile des Farbstoffs der Formel (10) homogen gemischt und ergeben 100 Teile der Mischung, die im folgenden als Farbstoffmischung C bezeichnet wird:

Beispiel 2

Man färbt 10 Teile Helancatrikot in 500 Teilen einer wässrigen Flotte, die 2 g/l Ammonacetat enthält und mit Essigsäure auf pH 5 gestellt wird. Als Farbstoffe werden 0,27% des gelben Farbstoffs der Formel

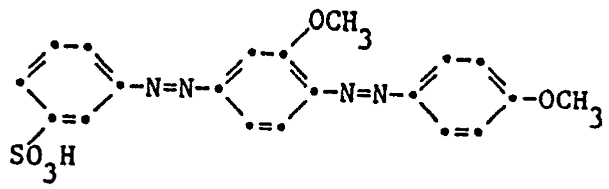

(18),

0,12% des roten Farbstoffs der Formel

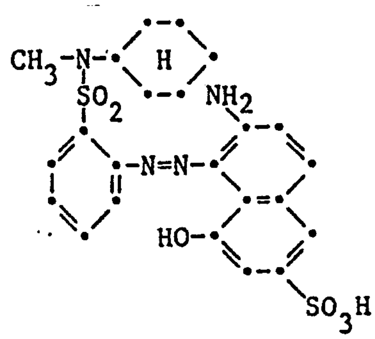

(1)

und 0,13% der gemäs Beispiel (1b) erhaltenen blauen Farbstoffmischung B verwendet, wobei sich die Mengenangabenn auf das Fasergewicht beziehen. Die Färbedauer bei einer Temperatur von 98° beträgt 30 bis 90 Minuten. Das gefärbte Helancastück wird anschliessend herausgenommen und wie üblich gespült und getrocknet. Man erhält ein in neutral-brauner Nuance völlig egal gefärbtes Gewebestück, das keinerlei materialbedingte Streifigkeit aufweist.

Verwendet man anstelle von 0,27% des gelben Farbstoffs der Formel (18) und 0,12% dès roten Farbstoffs der Formel (1) sowie 0,13% der blauen Farbstoffmischung B die in der folgenden Tabelle 1 angegebenen Farbstoffe der Formeln (18) und (1) sowie die Farbstoffmischungen aus Beispiel 1, so erhält man die in der angegebenen Nuance völlig egal gefärbten Gewebestücke.

Tabelle 1:

| Beispiel | verwendete Farbstoffe | Nuance |
|---|---|---|
| 3 | 0,18% des Farbstoffs der Formel (18)<br>0,18% des Farbstoffs der Formel (1)<br>0,077% der Farbstoffmischung C | rotstichig braun |
| 4 | 0,25% des Farbstoffs der Formel (18)<br>0,04% des Farbstoffs der Formel (1)<br>0,14% der Farbstoffmischung A | oliv |

Beispiel 5

Man färbt 10 Teile Polyamid 66-Garn in 400 Teilen einer wässrigen Flotte, die 1,5 g/l Ammonacetat enthält und mit Essigsäure auf pH 5,5 gestellt wird. Als Farbstoffe werden 0,27% des Farbstoffs der Formel (18), 0,12% des Farbstoffs der Formel (1) und 0,13% der gemäss Beispiel 1b) erhaltenen Farbstoffmischung B verwendet, wobei sich die Mengenangaben auf das Fasergewicht beziehen. Das Färbebad wird innerhalb von 30 Minuten auf 98° erhitzt und 60 Minuten bei 96° bis 98° gehalten. Das gefärbte Garn wird anschliessend herausgenommen und wie üblich gespült und getrocknet. Man erhält ein in neutral brauner Nuance gefärbtes Garn.

Verwendet man anstelle von 0,27% des gelben Farbstoffs der Formel (18) und 0,12% des roten Farbstoffs der Formel (1) sowie 0,13% der blauen Farbstoffmischung B die in der folgenden Tabelle 2 angegebenen Farbstoffe der Formeln (18) und (1) sowie die Farbstoffmischungen aus Beispiel 1, so erhält man das in der angegebenen Nuance gefärbte Garn.

Tabelle 2:

| Beispiel | verwendete Farbstoffe | Nuance |
|---|---|---|
| 6 | 0,18% des Farbstoffs der Formel (18)<br>0,18% des Farbstoffs der Formel (1)<br>0,077% der Farbstoffmischung C | rotstichig braun |
| 7 | 0,25% des Farbstoffs der Formel (18)<br>0,05% des Farbstoffs der Formel (1)<br>0,14% der Farbstoffmischung A | oliv |

Verwendet man ferner anstelle des gelben Farbstoffs der Formel (18) den orangen Farbstoff der Formel

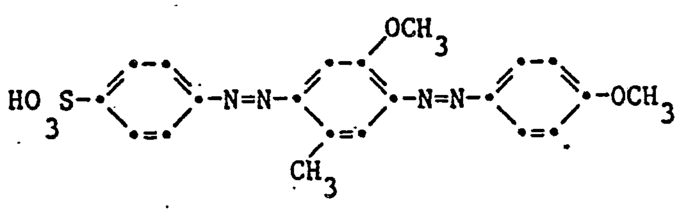

(19)

zusammen mit dem roten Farbstoff der Formel (1) und den Farbstoffmischungen aus Beispiel 1, so erhält man mit den in der folgenden Tabelle 23 angegebenen Farbstoffen das in der angegebenen Nuance gefärbte Garn.

Tabelle 3:

| Beispiel | Farbstoffe | Nuance |
|---|---|---|
| 8 | 0,27% des Farbstoffs der Formel (19)<br>0,1% des Farbstoffs der Formel (1)<br>0,14% der Farbstoffmischung B | neutral braun |
| 9 | 0,18% des Farbstoffs der Formel (19)<br>0,12% des Farbstoffs der Formel (1)<br>0,09% der Farbstoffmischung C | rotstichig braun |
| 10 | 0,25% des Farbstoffs der Formel (19)<br>0,03% des Farbstoffs der Formel (1)<br>0,16% der Farbstoffmischung A | oliv |

Beispiel 11

Verfährt man wie in Beispiel 5 angegeben und verwendet bei sonst gleicher Verfahrensweise anstelle von 0,13% der gemäss Beispiel 1b) erhaltenen Farbstoffmischung B 0,12% des Farbstoffs der Formel

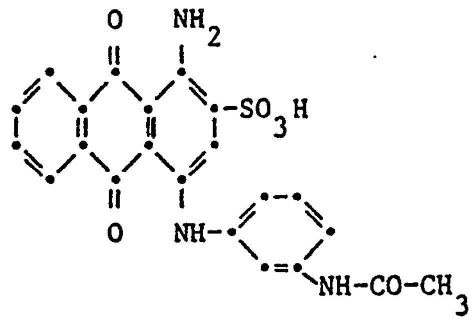

(13)

so erhält man ein in neutral brauner Nuance gefärbtes Garn.

Verwendet man anstelle von 0,12% des Farbstoffs der Formel (13) die in der folgenden Tabelle 4 angegebenen Farbstoffe, wobei der darin verwendete Farbstoff der Formel (14) die folgende Konstitution hat:

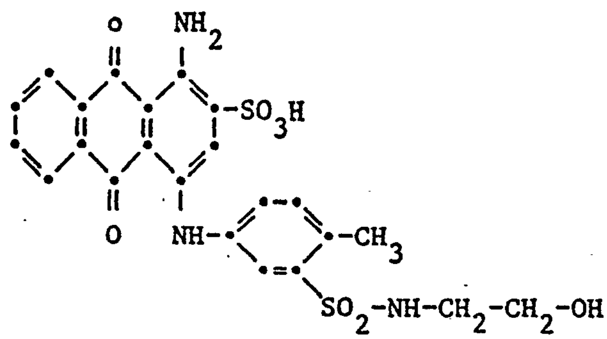

(14),

so erhält man das in der angegebenen Nuance gefärbte Garn.

Tabelle 4:

| Beispiel | Farbstoffe | Nuance |
|---|---|---|
| 12 | 0,18% des Farbstoffs der Formel (18)<br>0,17% des Farbstoffs der Formel (1)<br>0,06% des Farbstoffs der Formel (13) | rotstichig braun |
| 13 | 0,25% des Farbstoffs der Formel (18)<br>0,036% des Farbstoffs der Formel (1)<br>0,125% des Farbstoffs der Formel (13) | olive |
| 14 | 0,27% des Farbstoffs der Formel (18)<br>0,12% des Farbstoffs der Formel (1)<br>0,12% des Farbstoffs der Formel (14) | neutrales braun |
| 15 | 0,18% des Farbstoffs der Formel (18)<br>0,17% des Farbstoffs der Formel (1)<br>0,06% des Farbstoffs der Formel (14) | rotstichig braun |
| 16 | 0,25% des Farbstoffs der Formel (18)<br>0,036% des Farbstoffs der Formel (1)<br>0,12% des Farbstoffs der Formel (14) | olive |

Beispiel 17

500 $m^2$4 eines Polyamid (6.6)-Schnittflorteppichs (Veloursware mit Polypropylenbändchenrücken) mit einem Quadratmetergewicht von 535 g werden in einer Flotte, die pro Liter 1 g des Umsetzungsprodukts aus 1 Mol Nonylphenol und 9 Mol Aethylenoxyd enthält, kontinuierich vorgenetzt und dann auf eine Flottenaufnahme von 40 Gewichtsprozent abgesaugt.

In einer Verschäumgsvorrichtung (Mixer) wird aus folgender wässeriger Flotte ein Farbschaum hergestellt, dessen Verschäumungsgrad 1:10 beträgt:

0,6 g/l des Farbstoffs der Formel

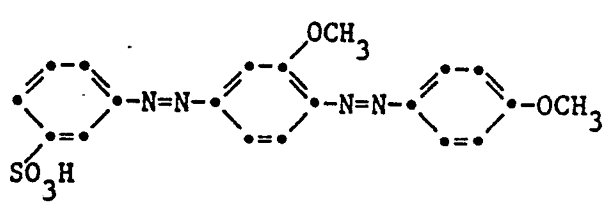

(18),

0,35 g/l des Farbstoffs der Formel

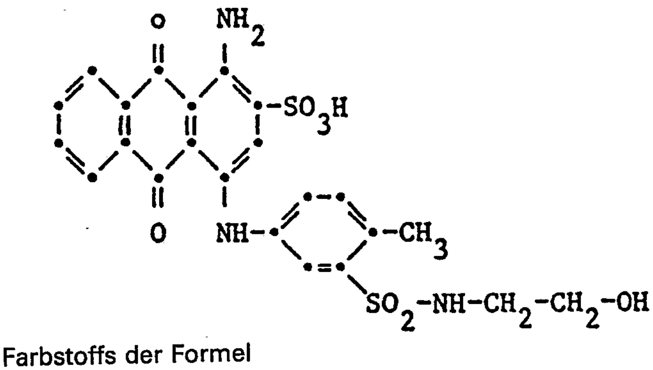

(14),

0,40 g/l des Farbstoffs der Formel

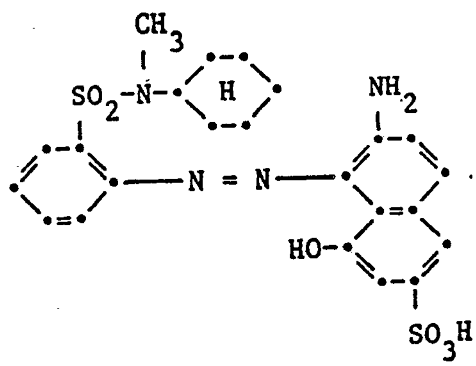

(1)

2,5 g/l eines Schaumstabilisatorgemisches aus Kokosfettsäurediäthanolamid/Nonylphenolpolyglykol(11)äther und Lauryltriglykoläthersulfat-Natrium,

0,6 g/l des Siloxanoxyalkylen-Copolymerisates der Formel

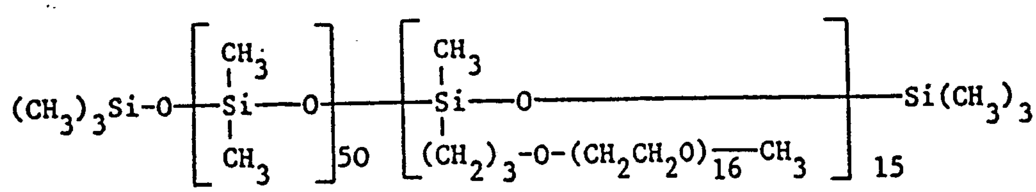

1 g/l Natriumacetat, sowie Essigsäure zur Einstellung der Flotte auf eine pH-Wert von 6,0.

Dieser Schaum wird dann aus einem Schaumbehälter, der eine verstellbare Rakel für die Einstellung der gewünschten Schaumdicke aufweist, über eine Auftragswalze mittels einer Rutsche auf die Polseite des durch die Färbeanlage laufenden Teppichs aufgebracht (Laufgeschwindigkeit 9 m/Minute). Die Schichthöhe des Schaums beträgt 8 mm. Der Farbschaumauftrag beträgt 135%.

Anschliessend durchläuft der Teppich eine Vakuumpassage, in der von der Rückseite her die Schaumschicht teilweise in den Teppich eingesaugt wird (Unterdruck von 0,1 bar), wodurch die Höhe der Schaumschicht etwas reduziert wird. Ueber eine Transportwalze läuft der Teppich dann in einen Dämpfer (102°C, Sattdampf), wo ein leichtes Aufschäumen und dann ein Zerstören des Schaums erfolgt. Anschliessend wird der Teppich mit Wasser von etwa 80°C abgespritzt, dann abgesaugt und bei 100 bis 130°C auf einem Siebtrommeltrockner getrocknet.

Das erhaltene Teppichmaterial ist egal, in einem beigen Farbton gefärbt, zeigt eine hervorragende Durchfärbung, die Weichheit und Bauschigkeit des Materials wird durch das Schaumfärben positiv beeinflusst.

Beispiel 18 (Teppichdruck)

Ein Velours-Teppichboden aus Polyamid-6 mit einem Gewicht von 350 bis 400 g/m² wird mit einer Klotzflotte, bestehend aus 988 Teilen Wasser, 10 teilen Natronlauge 36°, Bé und 2 Teilen Netzmittel, auf einem Foulard imprägniert ud auf eine Flottenaufnahme von 80% abgequetscht.

Auf denn so vorbehandelten Teppich wird mittels einer Düse eine Farbpaste der folgenden Zusammensetzung in Form eines Musters aufgespritzt:

942 Teile Wasser,
50 Teile Verdicker,
3 Teile Antischaumittel,
3 Teile des gelben Farbstoffes der Formel (18) von Beispiel 2,
1 Teil des roten Farbstoffes der Formel (1) von Beispiel 2, sowie 1 Teil der blauen Farbstoffmischung A von Beispiel 1.

Der verwendete Verdicker weist die folgende Zusammensetzung auf:
240 Teile Lackbenzin,
50 Teile Wasser-in-Oel-Emulgator,
20 Teile Oel-in Wasser-Emulgator,
20 Teile Antischaummittel,
50 Teile vernetztes Carboxyvinylpolymer mit einem Molekulargewicht von ca. 4.000.000,
70 Teile lineares Carboxyvinylpolymer mit einem Molekulargewicht von ca. 1.00.000, und
550 Teile Wasser, dessen pH-Wert mit Essigsäure auf 4,5 gestellt wurde.

Das mit der Farbpaste bespritzte Material wird anschliessend während 5 Minuten mit Sattdampf von 101° behandelt zur Fixierung der Farbstoffe, gespült, neutralisiert, erneut gespült und getrocknet.

Man erhält einen Velours-Teppichboden mit einem braunen Muster mit sehr scharfen Konturen, welcher eine sehr gute Penetration und keinerlei "Frosting" aufweist.

Beispiel 19 (Teppich-Kontinue-Färbung)

2,7 Teile des gelben Farbstoffs der Formel (18) von Beispiel 2, 1,2 Teile des roten Farbstoffs der Formel (1) von Beispiel 2 und 1,3 Teile der blauen Farbstoffmischung B von Beispiel 1 werden in 100 Teilen Wasser durch kurzes Kochen gelöst. Diese Lösung wird hierauf zu einer Lösung, enthaltend 3 Teile eines Verdickungsmittels auf der Basis von Johannisbrotkernmehl, 5,0 Teile eines koazervatbildenden Klotzhilfsmittels auf der Basis eines Kondensationsproduktes einer höher molekularen Fettsäure mit einem Oxyalkylamin, 2,0 Teile krist. Mononatriumphosphat und 1,0 Teile krist. Dinatriumphosphat in 500 Teilen kaltem Wasser zugegeben. Anschliessend wird mit kaltem Wasser auf 1000 Teile aufgefüllt. Von dieser, einen pH-Wert von 5,5 bis 6,5 aufweisenden Flotte werden 300%, bezogen auf das Teppichgewicht, auf einen Polyamid-Nadelflor-Rohteppich aufgetragen, bei einer Teppichgeschwindigkeit von 8 Meter pro Minute. Der getränkte Teppich gelangt in einen Schleifendämpfer, wo er während 10 Minuten mit Sattdampf von 98 bis 100°C behandelt wird.

Nach dem Waschen in einer Breitwaschmaschine erhält man einen in neutral brauner Nuance gefärbten Teppich.

Verwendet man anstelle von 2,7 Teilen des gelben Farbstoffs der Formel (18), 1,2 Teilen des roten Farbstoffs der Formel (1) und 1,3 Teilen der blauen Farbstoffmischung B die in der folgenden Tabelle 5 angegebenen Farbstoffe bzw. Farbstoffmischungen so erhält man in der angegebenen Nuance gleichmässig gefärbte Teppiche.

Tabelle 5:

| Beispiel | Farbstoffe | Nuance |
|---|---|---|
| 20 | 2,4 Teile des Farbstoffs der Formel (18)<br>2,3 Teile des Farbstoffs der Formel (1)<br>1,0 Teile der Farbstoffmischung B | rotbraun |
| 21 | 3,0 Teile des Farbstoffs der Formel (18)<br>0,4 Teile des Farbstoffs der Formel (1)<br>1,2 Teile der Farbstoffmischung B | oliv |

Beispiel 22 (Woll-Kontinue-Färbung)

Ein Wollstoff wird mit einer Flotte, enthaltend 2,6 Teile des gelben Farbstoffs der Formel (18), 5,2 Teile des roten Farbstoffs der Formel (1), 15,7 Teile der blauen Farbstoffmischung B, 2,0 Teile eines Verdickungsmittels auf der Basis von Alginat, 22,0 Teile eines koazervatbildenden Klotzmittels auf der Basis eines Kondensationsproduktes einer höher molekularen Fettsäure mit einem Oxyalkylamin und 8,0 Teile 80%ige Ameisensäure in 1000 Teilen Wasser foulardiert, wobei eine Flottenaufnahme von 85%, bezogen auf das Gewicht von Wolle, erreicht wird. Anschliessend dämpft man während 15 Minuten in Sattdampf von 98 bis 100° und wäscht. Man erhält eine gleichmässige Olivefärbung.

**Patentansprüche**

1. Verfahren zum Trichromie-Färben oder -Bedrucken von natürlichen und synthetischen Polyamidmaterialien mit Farbstoffmischungen, dadurch gekennzeichnet, dass man einen Farbstoff der Formel

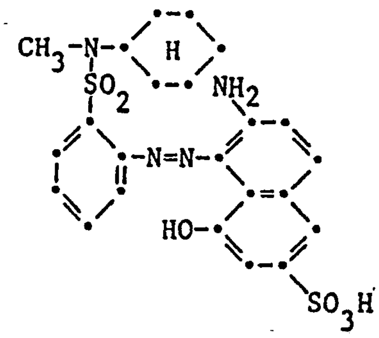

(1)

zusammen mit mindestens einem Farbstoff der Formel

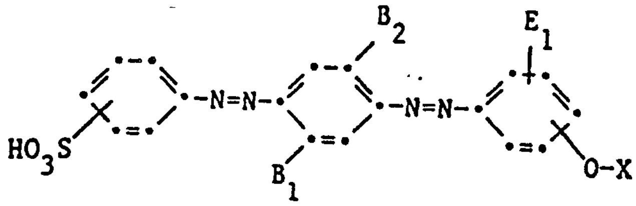

(2),

worin $B_1$, $B_2$ und $E_1$ Wasserstoff, $C_{1-4}$-Alkyl oder $C_{1-4}$-Alkoxy und X geradkettig oder verzweigtes $C_{1-4}$-Alkyl oder geradkettig oder verzweigtes $C_{2-4}$-Hydroxyalkyl bedeuten, und einem Farbstoff der Formel

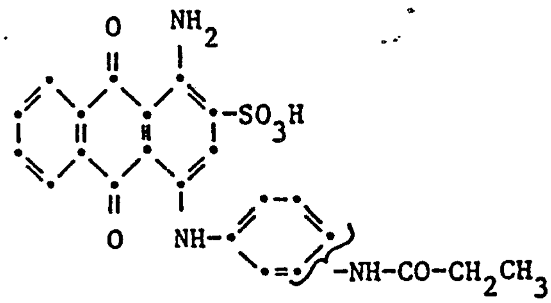

(6),

oder einer Mischung der Farbstoffe der Formeln

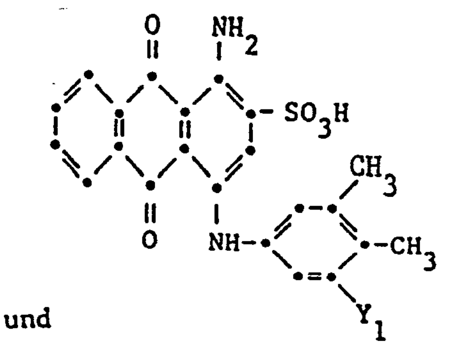

(4)

und

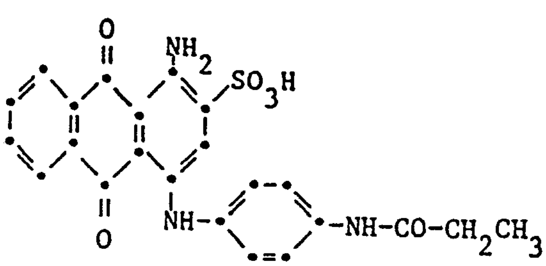

(10)

worin in Formel (4) $Y_1$ $C_{2-4}$-Hydroxyalkylsulphamoyl bedeutet, oder einem Farbstoff der Formel

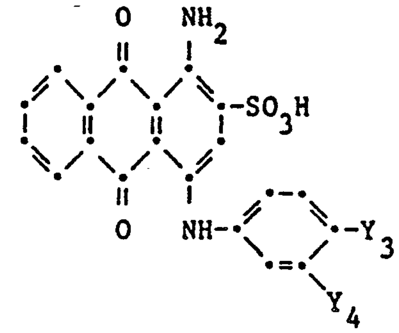

(7),

worin $R_3$ Wasserstoff und $Y_4$ Acetylamino bedeuten, oder worin $Y_3$ Methyl und $Y_4$ $C_{2-4}$-Hydroxyalkylsulphamoyl bedeuten, verwendet.

2. Verfahren gemäss Anspruch 1, dadurch gekennzeichnet, dass man den Farbstoff der Formel (1) zusammen mit mindestens einem Farbstoff der Formel (2) und einer Farbstoffmischung, die den Farbstoff der Formel

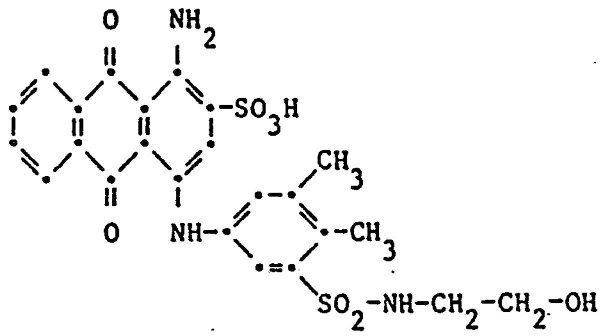

(11)

und den Farbstoff der Formel

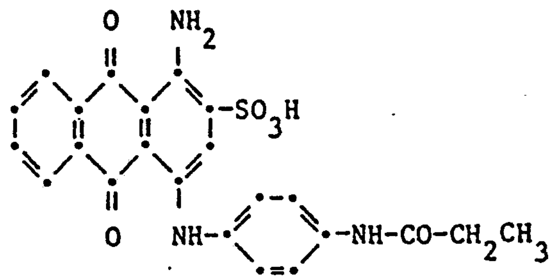

(10)

enthält, verwendet.

3. Verfahren gemäss Anspruch 2, dadurch gekennzeichnet, dass man den Farbstoff der Formel (1) zusammen mit mindestens einem Farbstoff der Formel (2) und einer Farbstoffmischung, worin das Verhältnis der Farbstoffe der Formeln (11) und (10) 60:40 bis 40:60 ist, verwendet.

4. Verfahren gemäss Anspruch 1, dadurch gekennzeichnet, dass man den Farbstoff der Formel (1) zusammen mit mindestens einem Farbstoff der Formel (2) und dem Farbstoff der Formel

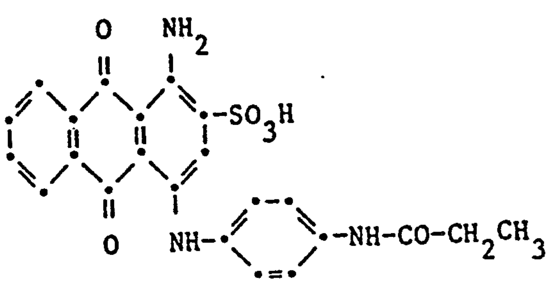

(10)

verwendet.

5. Verfahren gemäss Anspruch 1, dadurch gekennzeichnet, dass man den Farbstoff der Formel (1) zusammen mit mindestens einem Farbstoff der Formel (2) und dem Farbstoff der Formel

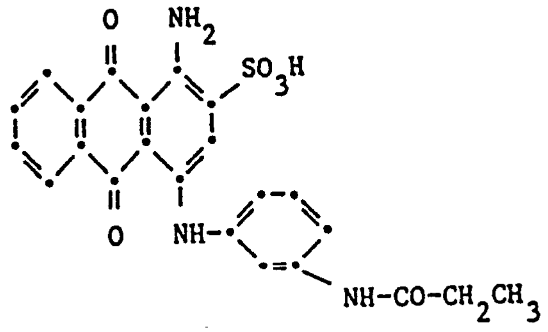

(12)

verwendet.

6. Verfahren gemäss Anspruch 1, dadurch gekennzeichnet, dass man den Farbstoff der Formel (1) zusammen mit mindestens einem Farbstoff der Formel (2) und dem Farbstoff der Formel

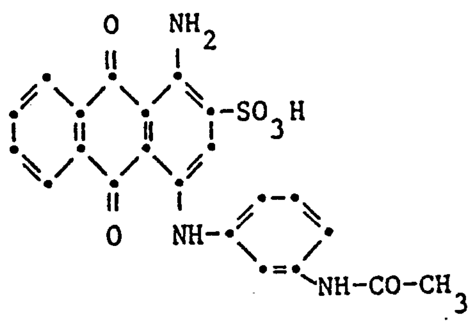

(13)

verwendet.

7. Verfahren gemäss Anspruch 1, dadurch gekennzeichnet, dass man den Farbstoff der Formel (1) zusammen mit mindestens einem Farbstoff der Formel (2) und dem Farbstoff der Formel

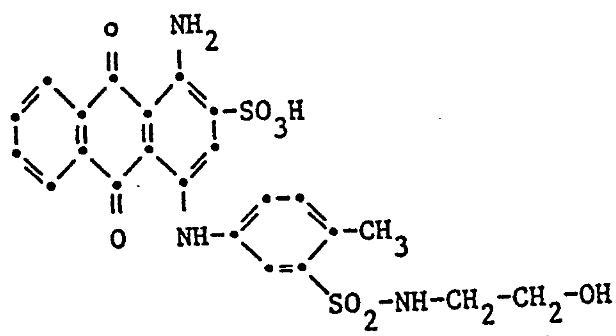

(14)

verwendet.

8. Verfahren gemäss einem der Ansprüche 1 bis 7, dadurch gekennzeichnet, dass man als Farbstoff der Formel (2) einen Farbstoff der Formel

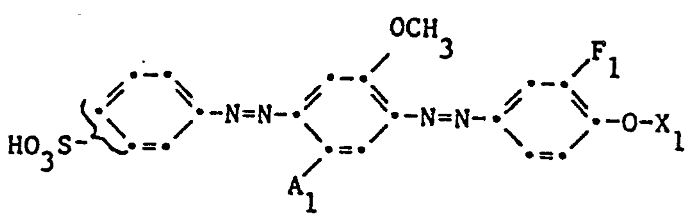

(17)

worin $A_1$ Wasserstoff oder Methyl, $F_1$ Wasserstoff oder Methyl und $X_1$ Methyl, Aethyl, β-Hydroxyäthyl, β-Hydroxypropyl, β-Hydroxybutyl oder α-Aethyl-β-hydroxyäthyl ist, verwendet.

9. Verfahren gemäss Anspruch 8, dadurch gekennzeichnet, dass man den Farbstoff der Formel

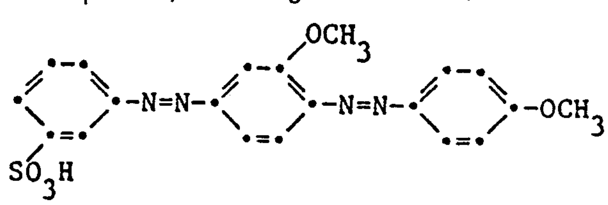

(18)

verwendet.

10. Verfahren gemäss Anspruch 8, dadurch gekennzeichnet, dass man den Farbstoff der Formel

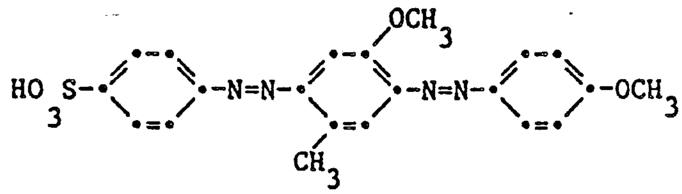

(19)

verwendet.

11. Verfahren gemäss Anspruch 2, dadurch gekennzeichnet, dass man den Farbstoff der Formel

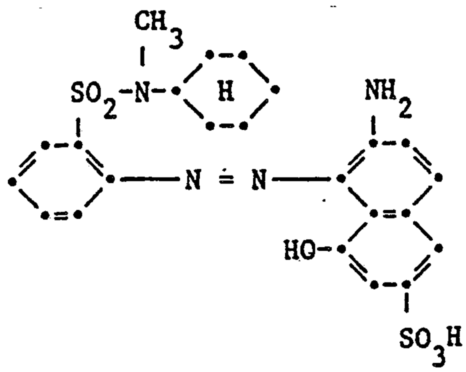

(1)

zusammen mit dem Farbstoff der Formel

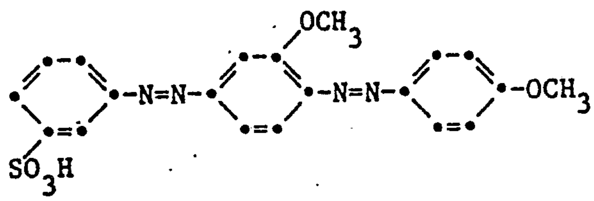

(18),

und einer Farbstoffmischung, die den Farbstoff der Formel

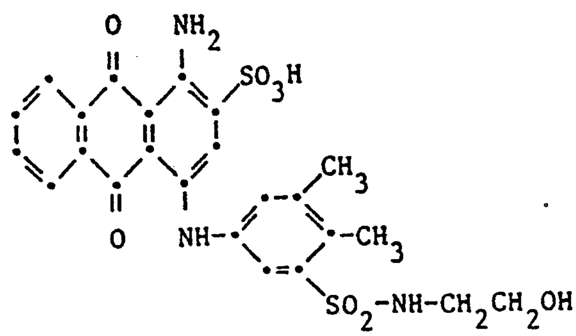

(11)

und den Farbstoff der Formel

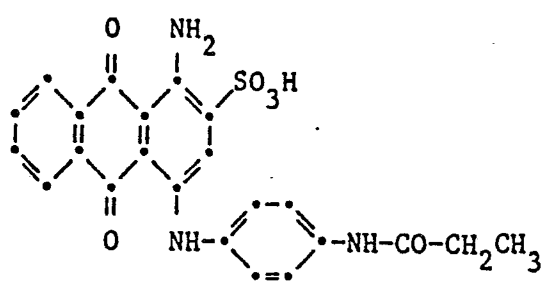

(10)

im Verhältnis der Farbstoffe der Formeln (11) und (10) von 60:40 bis 40:60 enthält, verwendet.

12. Verfahren gemäss Anspruch 6, dadurch gekennzeichnet, dass man den Farbstoff der Formel

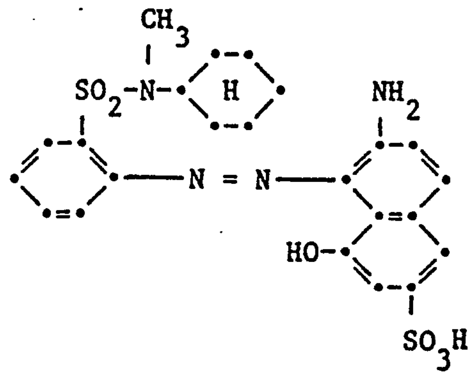

(1)

zusammen mit dem Farbstoff der Formel

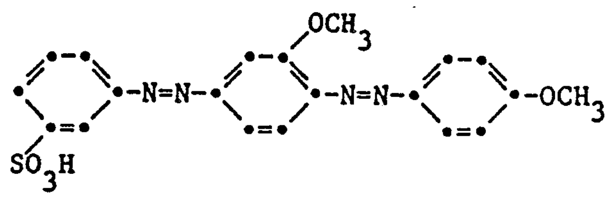

(18),

und dem Farbstoff der Formel

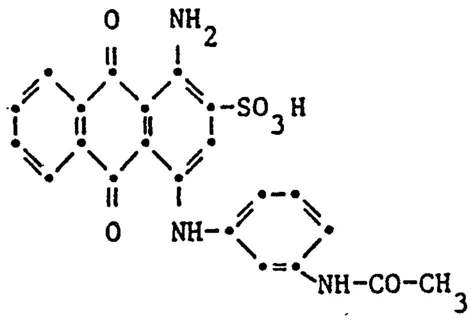

(13)

verwendet.

13. Verfahren gemäss Anspruch 7, dadurch gekennzeichnet, dass man den Farbstoff der Formel

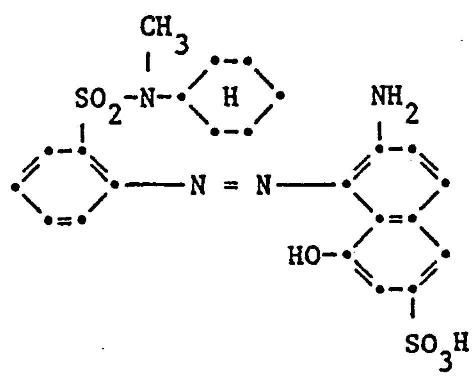

(1)

zusammen mit dem Farbstoff der Formel

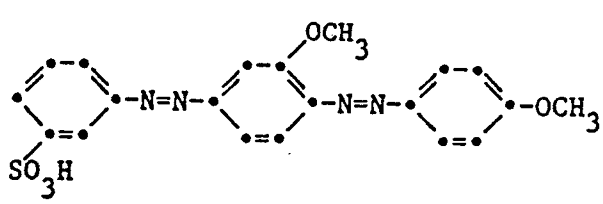

(18),

und dem Farbstoff der Formel

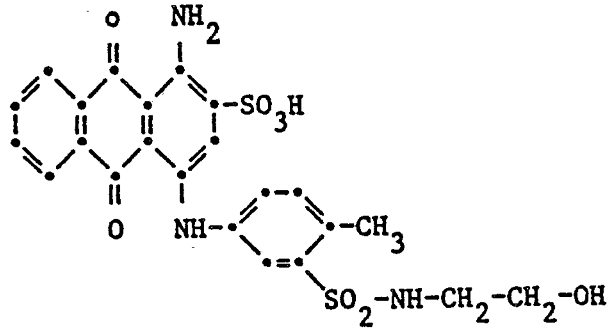

(14)

verwendet.

14. Verfahren gemäss Anspruch 2, dadurch gekennzeichnet, dass man den Farbstoff der Formel

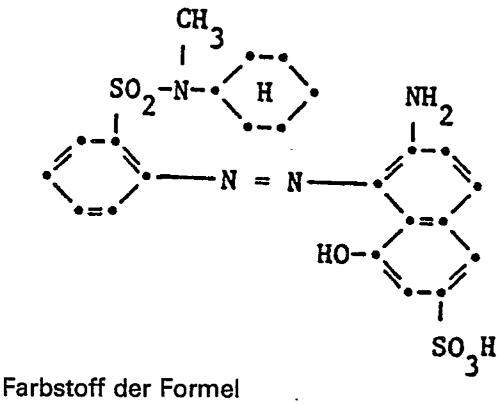

(1)

zusammen mit dem Farbstoff der Formel

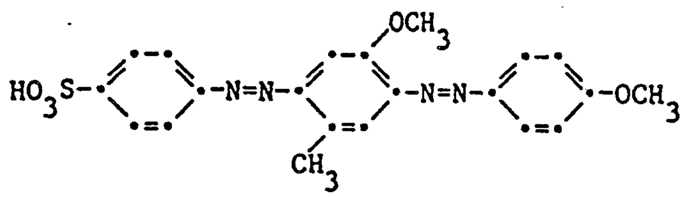

(19)

und einer Farbstoffmischung, die den Farbstoff der Formel

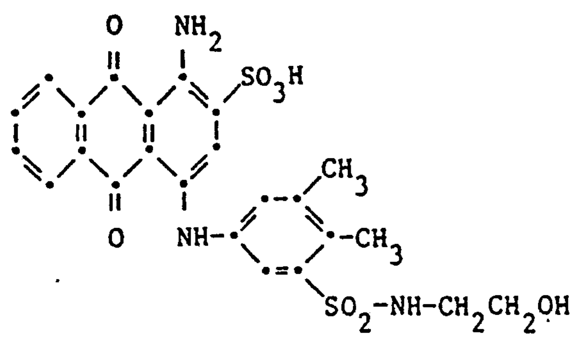

(11)

und den Farbstoff der Formel

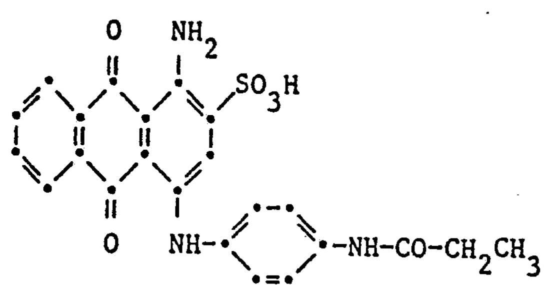

(10)

im Verhältnis der Farbstoffe der Formeln (11) und (10) von 60:40 bis 40:60 enthält, verwendet.

15. Verfahren gemäss Anspruch 1 zum Trichromie-Färben oder -Bedrucken von Materialien aus natürlichem oder synthetischem Polyamid, dadurch gekennzeichnet, dass man diese Materialien mit einer Färbeflotte oder Druckpaste behandelt, welche die Farbstoffmischung gemäss Anspruch 1 sowie Wasser und gegebenenfalls weitere Zusätze enthält.

16. Wässrige Färbeflotte oder Druckpaste, dadurch gekennzeichnet, dass sie Wasser, die Farbstoffmischung gemäss Anspruch 1 sowie gegebenenfalls weitere Zusätze enthält.

**Revendications**

1. Procédé pour la teinture ou l'impression en trichromie de matériaux polyamides synthétiques ou naturels avec des mélanges de colorants, caractérisé en ce que l'on utilise un colorant de formule

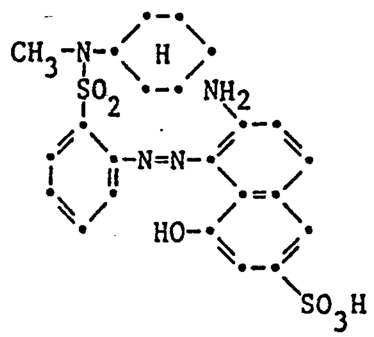

(1)

conjointement avec au moins un colorant de formule

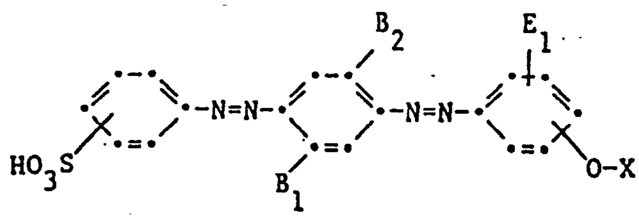

(2),

dans laquelle $B_1$, $B_2$ et $E_1$ représentent un atome d'hydrogène, un groupe alkyle en $C_{1-4}$ ou alcoxy en $C_{1-4}$, et X représente un groupe alkyle en $C_{1-4}$ à chaîne droite ou ramifiée, ou un groupe hydroxyalkyle en $C_{2-4}$ à chaîne droite ou ramifiée, et avec un colorant de formule

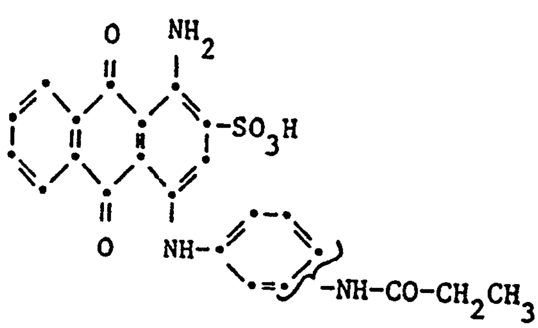

(6),

ou avec un mélange des colorants de formule

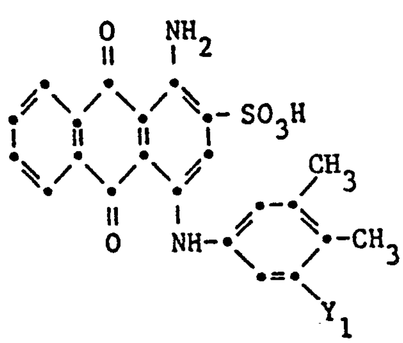

(4)

et

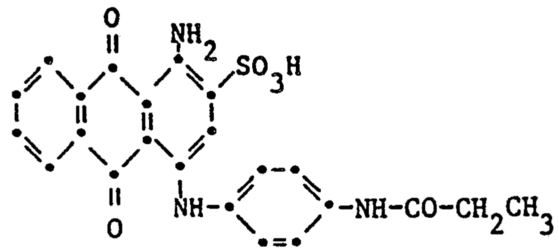

(10)

où dans la formule (4) $Y_1$ représente un groupe (hydroxyalkyle en $C_{2-4}$)-sulfamoyle, ou avec un colorant de formule

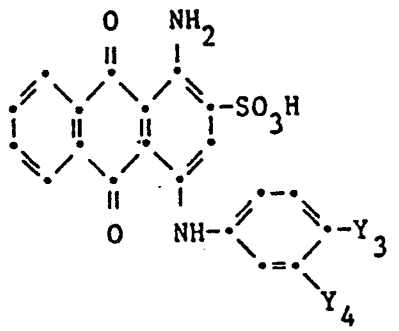

(7),

dans laquelle $Y_3$ représente un atome d'hydrogène et $Y_4$ un groupe acétylamino, ou bien dans laquelle $Y_3$ représente un groupe méthyle et $Y_4$ un groupe (hydroxyalkyle en $C_{2-4}$)-sulfamoyle.

2. Procédé selon la revendication 1, caractérisé en ce que l'on utilise le colorant de formule (1) conjointement avec au moins un colorant de formule (2) et avec un mélange de colorants qui contient le colorant de formule

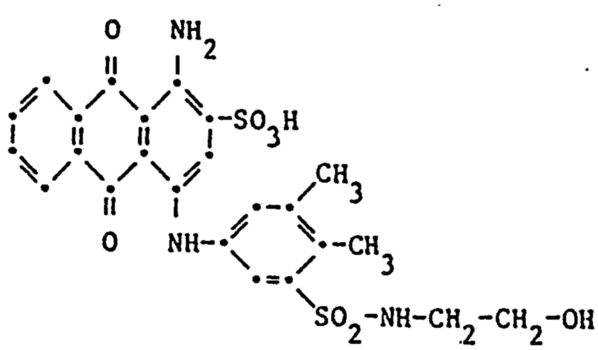

(11)

et le colorant de formule

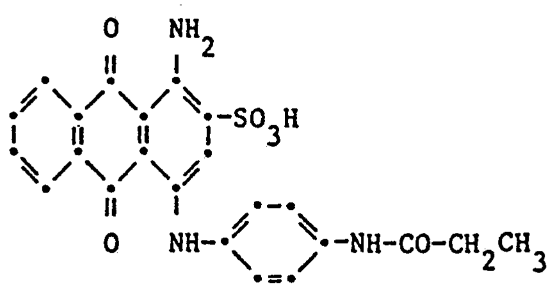

(10)

3. Procédé selon la revendication 2, caractérisé en ce que l'on utilise le colorant de formule (1) avec au moins un colorant de formule (2) et avec un mélange de colorants, dans lequel le rapport des colorants de formules (11) et (10) vaut de 60:40 à 40:60.

4. Procédé selon la revendication 1, caractérisé en ce que l'on utilise le colorant de formule (1) conjointement avec au moins un colorant de formule (2) et avec le colorant de formule

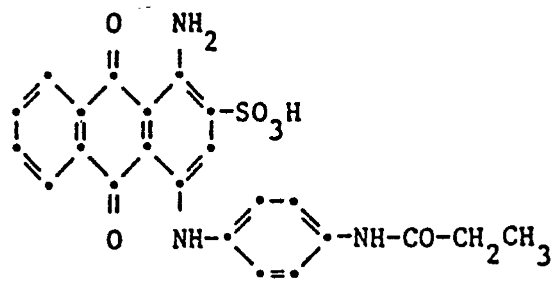

(10)

5. Procédé selon la revendication 1, caractérisé en ce que l'on utilise le colorant de formule (1) conjointement avec au moins un colorant de formule (2) et avec le colorant de formule

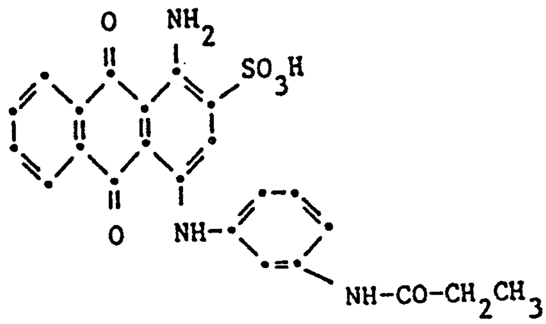

(12)

6. Procédé selon la revendication 1, caractérisé en ce que l'on utilise le colorant de formule (1) conjointement avec au moins un colorant de formule (2) et avec le colorant de formule

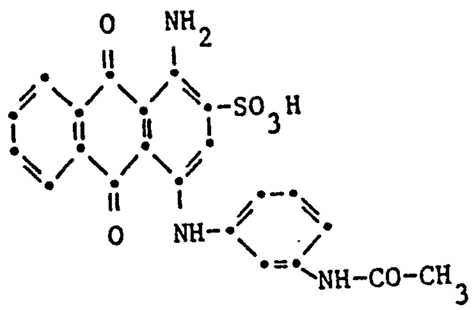

(13)

7. Procédé selon la revendication 1, caractérisé en ce que l'on utilise le colorant de formule (1) conjointement avec au moins un colorant de formule (2) et avec le colorant de formule

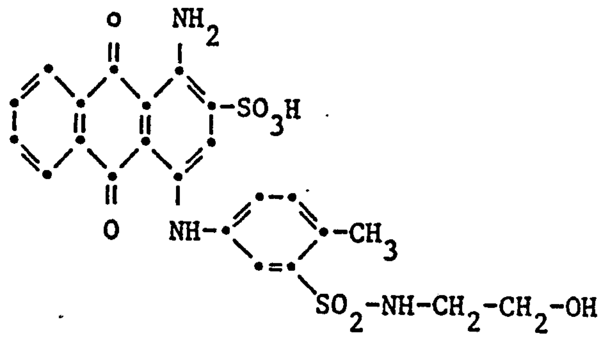

(14)

8. Procédé selon l'une des revendications 1 à 7, caractérisé en ce que l'on utilise, en tant que colorant de formule (2) un colorant de formule

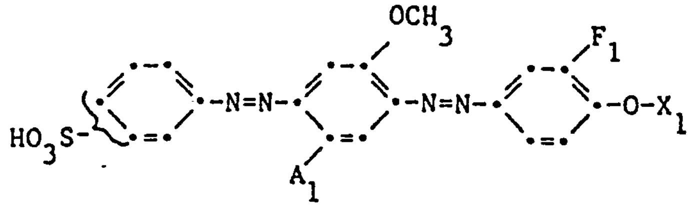

(17)

dans laquelle A est un atome d'hydrogène ou un groupe méthyle, F est un atome d'hydrogène ou un groupe méthyle, et X est un groupe méthyle, éthyle, -hydroxyéthyle, -hydroxypropyle, -hydroxybutyl ou -éthyl- -hydroxyéthyle.

9. Procédé selon la revendication 8, caractérisé en ce que l'on utilise le colorant de formule

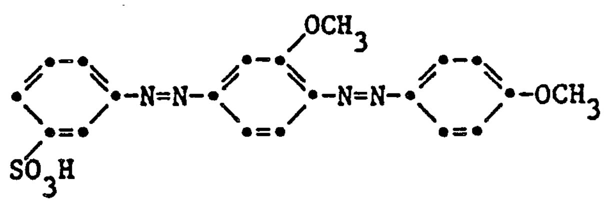

(18)

10. Procédé selon la revendication 8, caractérisé en ce que l'on utilise le colorant de formule

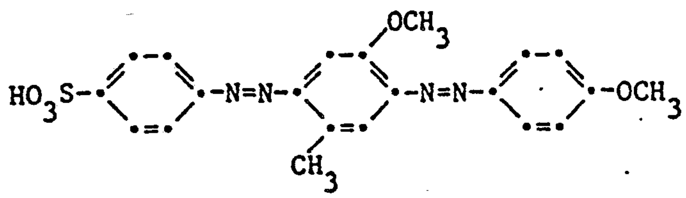

(19)

11. Procédé selon la revendication 2, caractérisé en ce que l'on utilise le colorant de formule

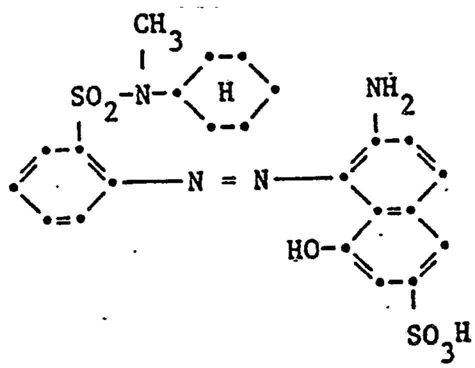

(1)

conjointement avec le colorant de formule

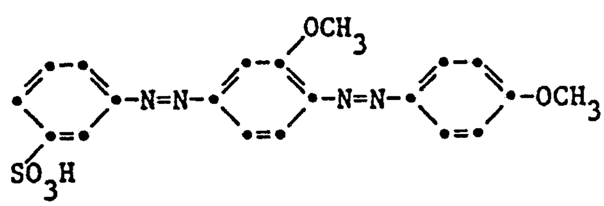

(18),

et avec un mélange de colorants qui contient le colorant de formule

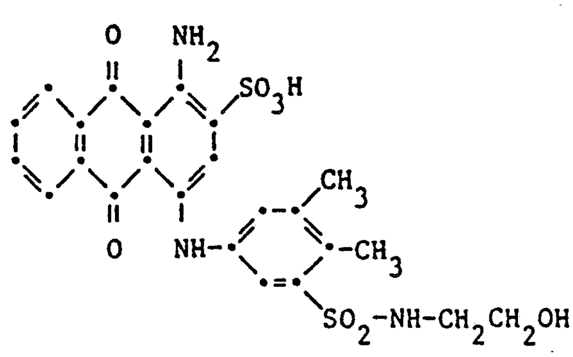

(11)

et le colorant de formule

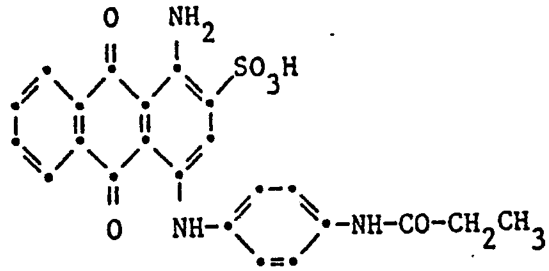

(10)

dans un rapport des colorants de formules (11) et (10) valant de 60:40 à 40:60.

12. Procédé selon la revendication 6, caractérisé en ce que l'on utilise le colorant de formule

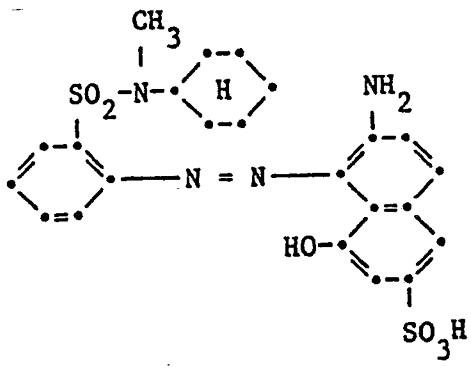

(1)

conjointement avec le colorant de formule

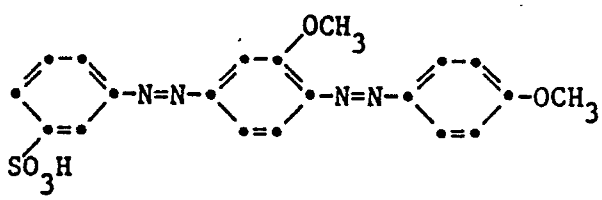

(18),

et avec le colorant de formule

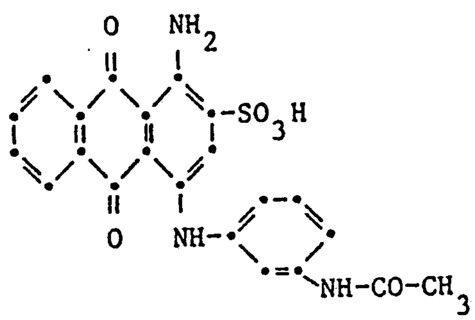

(13)

13. Procédé selon la revendication 7, caractérisé en ce que l'on utilise le colorant de formule

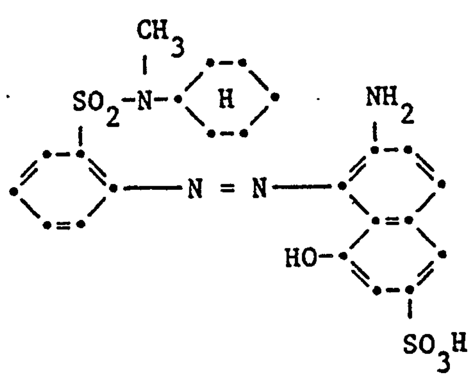

(1)

conjointement avec le colorant de formule

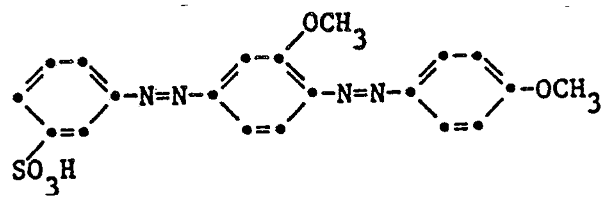

(18),

et avec le colorant de formule

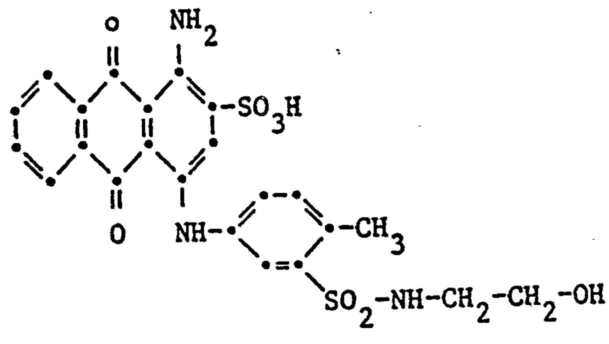

(14)

14. Procédé selon la revendication 2, caractérisé en ce que l'on utilise le colorant de formule

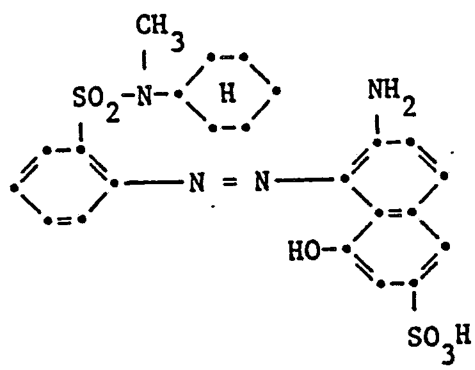

(1)

conjointement avec le colorant de formule

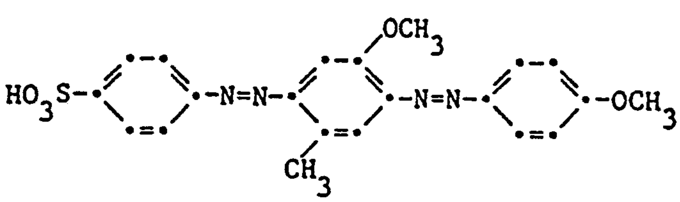

(19)

et avec un mélange de colorants, qui contient le colorant de formule

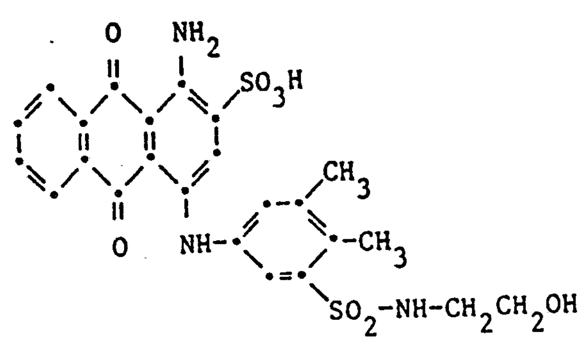

(11)

et le colorant de formule

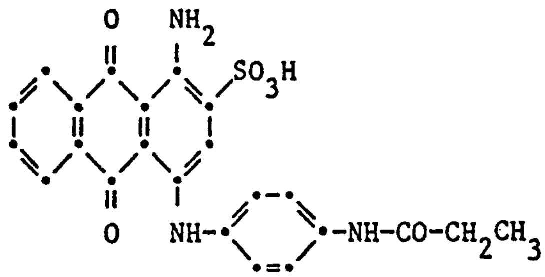

(10)

dans un rapport des colorants de formules (11) et (10) valant de 60:40 à 50:60.

15. Procédé selon la revendication 1 pour la teinture ou l'impression en trichromie de matériaux en polyamides naturels ou synthétiques, caractérisé en ce que l'on traite ces matériaux avec un bain de teinture ou une pâte d'impression qui contient le mélange de colorants selon la revendication 1, ainsi que de l'eau, et éventuellement d'autres adjuvants.

16. Bain de teinture aqueux ou pâte d'impression caractérisé (a) en ce qu'il ou elle contient de l'eau, le mélange de colorants selon la revendication 1, ainsi qu'éventuellement d'autres adjuvants.

**Claims**

1. A process for the trichromatic dyeing or printing of natural and synthetic polyamide materials with dye mixtures, which process comprises the use of a dye of formula

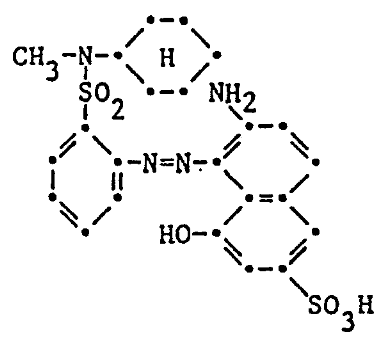

(1)

together with at least one dye of formula

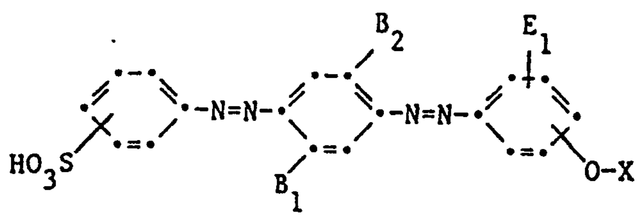

(2),

wherein $B_1$, $B_2$ and $E_1$ are hydrogen, $C_1$—$C_4$alkyl or $C_1$—$C_4$alkoxy, and X is straight chain or branched $C_1$—$C_4$alkyl, or straight chain or branched $C_2$—$C_4$hydroxyalkyl, and with a dye of formula

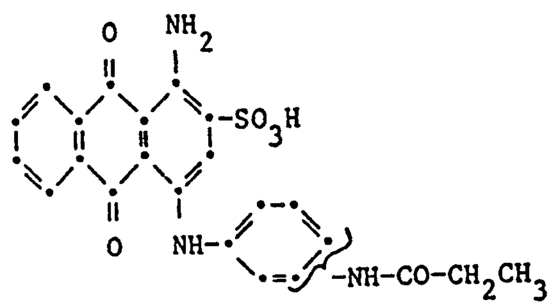

(6),

or with a mixture of the dyes of formulae

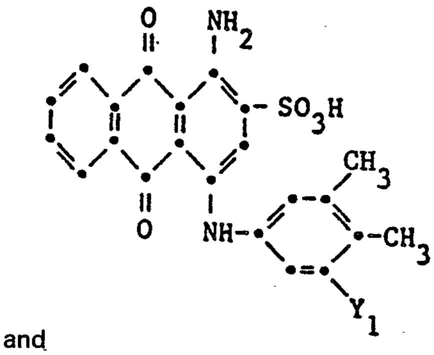

(4)

and

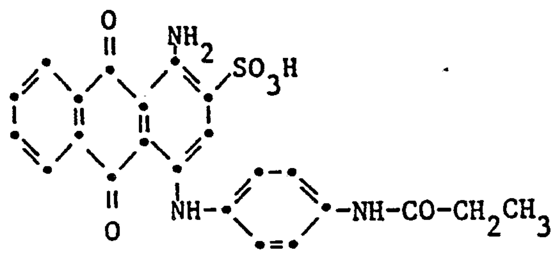

(10)

wherein $Y_1$ in formula (4) is $C_2$—$C_4$hydroxyalkylsulfamoyl, or with a dye of formula

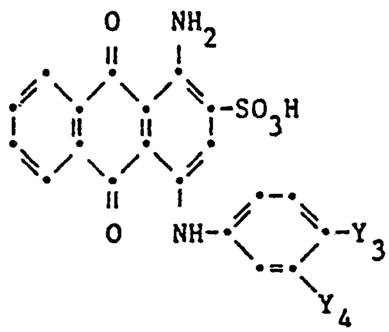

(7),

wherein $Y_3$ is hydrogen, and $Y_4$ is acetylamino, or wherein $Y_3$ is methyl, and $Y_4$ is $C_2$—$C_4$hydroxyalkylsulfamoyl.

2. A process according to claim 1, which comprises the use of the dye of formula (1) together with at least one dye of formula (2) and with a dye mixture containing the dye of formula

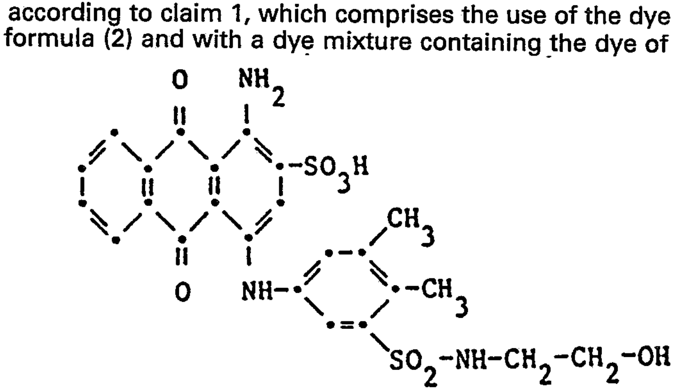

(11)

and the dye of formula

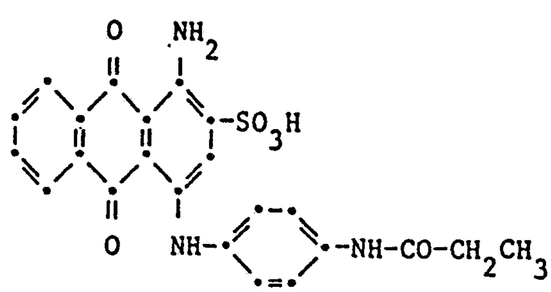

(10)

3. A process according to claim 2, which comprises the use of the dye of formula (1) together with at least one dye of formula (2) and with a dye mixture in which the ratio between the dyes of formulae (11) and (10) is 60:40 to 40:60.

4. A process according to claim 1, which comprises the use of the dye of formula (1) together with at least one dye of formula (2) and with the dye of formula

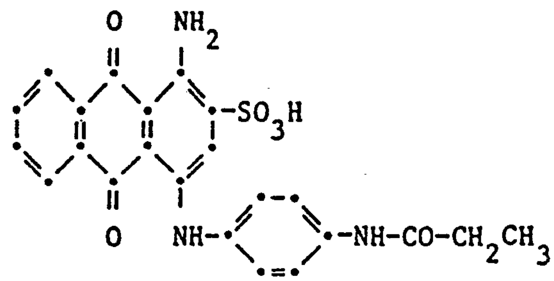

(10)

5. A process according to claim 1, which comprises the use of the dye of formula (1) together with at least one dye of formula (2) and with the dye of formula

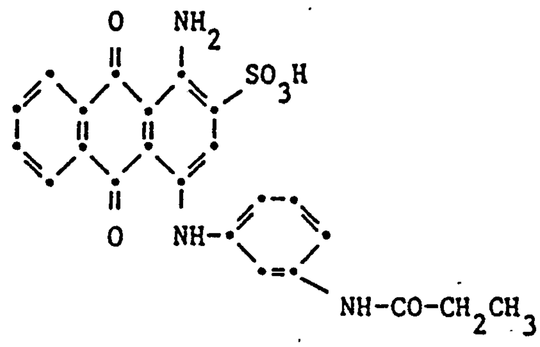

(12)

6. A process according to claim 1, which comprises the use of the dye of formula (1) together with at least one dye of formula (2) and with the dye of formula

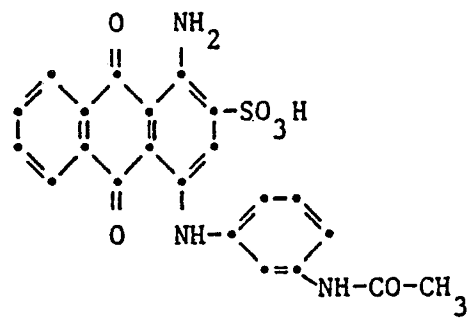

(13)

7. A process according to claim 1, which comprises the use of the dye of formula (1) together with at least one dye of formula (2) and with the dye of formula

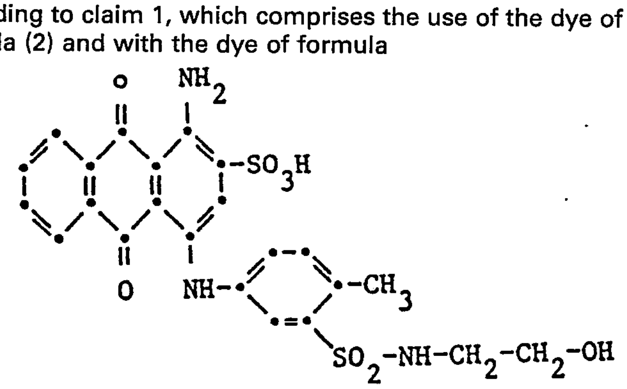

(14)

8. A process according to any one of claims 1 to 7, wherein the dye of formula (2) is a dye of formula

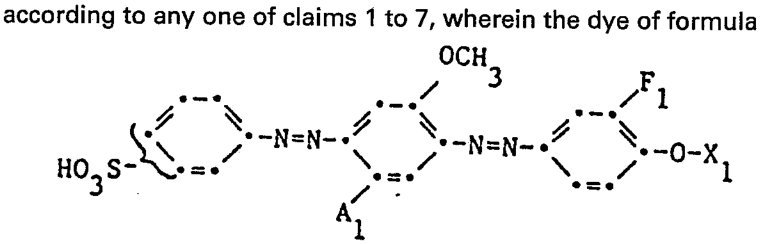

(17)

wherein $A_1$ is hydrogen or methyl, $F_1$ is hydrogen or methyl, and $X_1$ is methyl, ethyl, β-hydroxyethyl, β-hydroxypropyl, β-hydroxybutyl or α-ethyl-β-hydroxyethyl.

9. A process according to claim 8, which comprises the use of the dye of formula

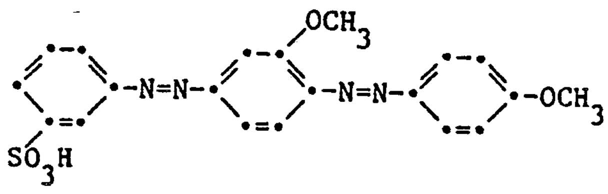

(18)

10. A process according to claim 8, which comprises the use of the dye of formula

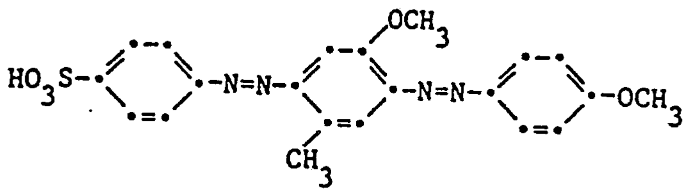

(19)

11. A process according to claim 2, which comprises the use of the dye of formula

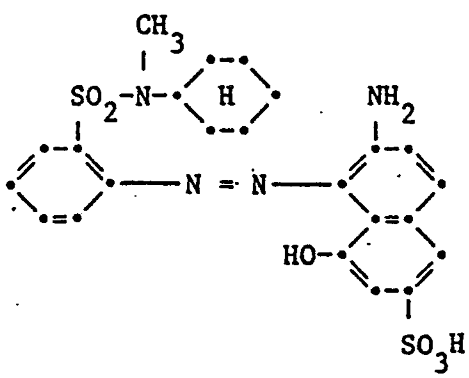

(1)

together with the dye of formula

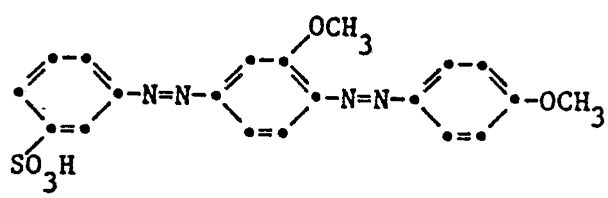

(18),

and a dye mixture which contains the dye of formula

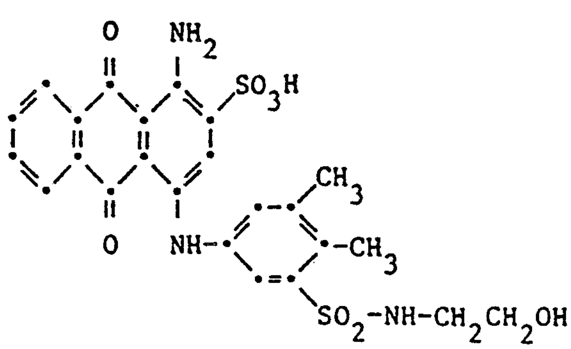

(11)

and the dye of formula

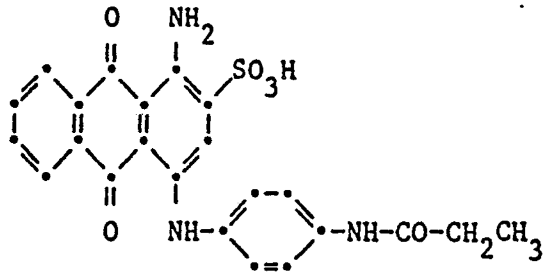

(10)

the ratio between the dyes of formulae (11) and (10) being 60:40 to 40:60.

12. A process according to claim 6, which comprises the use of the dye of formula

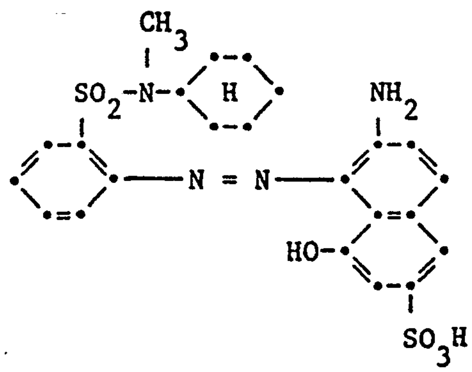

(1)

together with the dye of formula

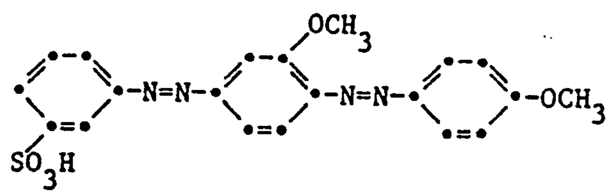

(18),

and the dye of formula

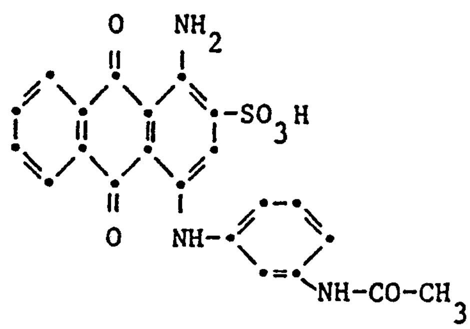

(13)

11. A process according to claim 7, which comprises the use of the dye of formula

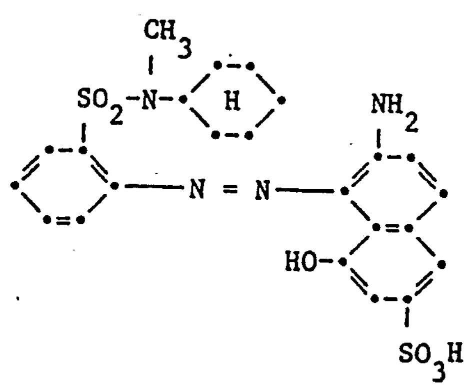

(1)

together with the dye of formula

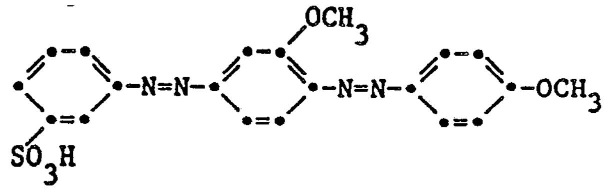

(18),

and the dye of formula

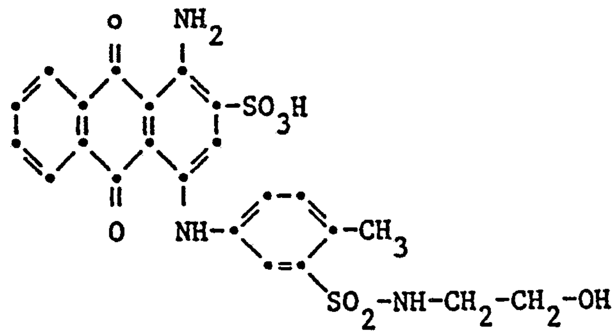

(14),

14. A process according to claim 2, which comprises the use of the dye of formula

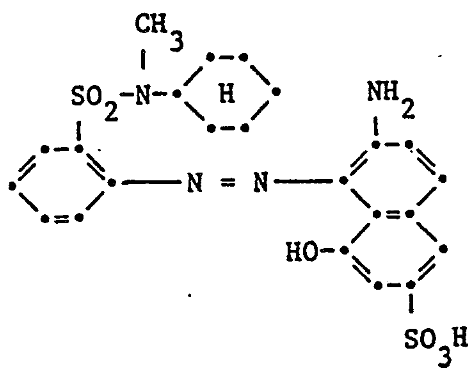

(1)

together with the dye of formula

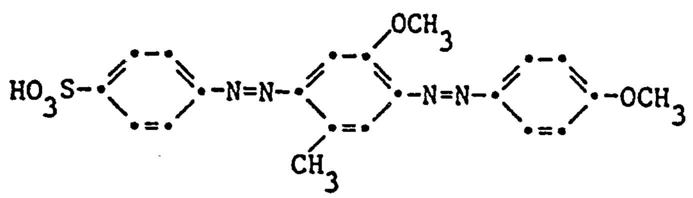

(19)

and a dye mixture which contains the dye of formula

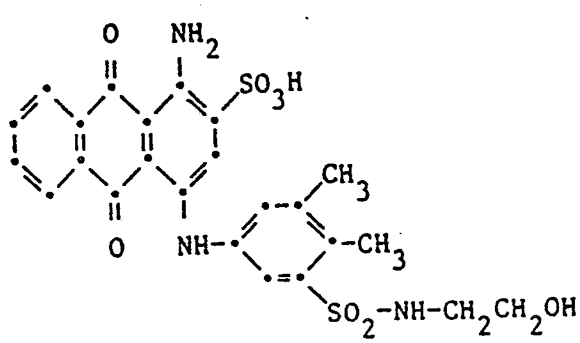

(11)

and the dye of formula

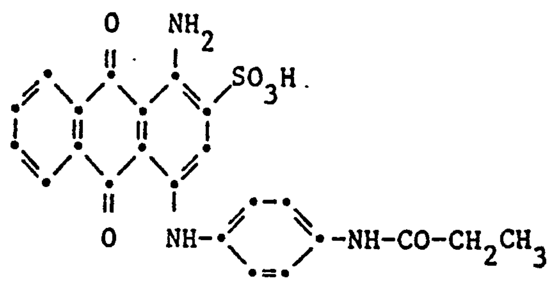

(10)

the ratio between the dyes of formulae (11) and (10) being 60:40 to 40:60.

15. A process according to claim 1 for the trichromatic dyeing or printing of materials made from natural or synthetic polyamide, which process comprises treating said materials with a dye liquor or printing paste which contains the dye mixture as claimed in claim 1, together with water and optional additional ingredients.

16. An aqueous dye liquor or printing paste, which contains water, the dye mixture according to claim 1, and optional additional ingredients.